# DEMANDE DE BREVET EUROPEEN

(11) **EP 4 009 580 A1**
(43) Date de publication de la demande: **08.06.2022**
(21) Numéro de dépôt: 21212719.5
(22) Date de dépôt: 07.12.2021
(51) Int. Cl.: H04L 9/32

(54) **PROCÉDÉ ET SYSTÈME DE TRANSFERT SÉCURISÉ DE DONNÉES D ESSAIS**

(30) Priorité: 07.12.2020 FR 2012753
(71) Demandeur: Electricité de France, 75008 Paris (FR)
(72) Inventeur: SONNEFRAUD, Christophe, 77370 FONTAINS (FR); CURTIT, François, 77590 CHARTRETTES (FR); TOULEMONDE, Charles, 77190 DAMMARIE-LES-LYS (FR)
(74) Mandataire: Regimbeau

(57) **Abrégé**

L'invention concerne un procédé de transfert sécurisé entre une machine d'essais et une base de données d'essais (BDD1), ladite machine d'essais étant reliée à la base de données d'essais (BDD1) par un réseau au moyen d'un terminal (UE) lui-même relié à une base de données (BDD2) formée d'une chaine de blocs dite blockchain, ledit procédé étant mis en oeuvre dans le terminal (UE) et comprend les étapes suivantes :
- obtention d'un ensemble de données d'essais issu d'une machine d'essais ;
- transmission des données d'essais à la base de données d'essais (BDD1) ;
- génération d'une signature numérique unique associée audit ensemble de données d'essais, ladite signature permettant d'identifier ledit ensemble de données d'essais de manière définitive ;
- écriture et horodatage dans la blockchain de ladite signature numérique unique de manière à stocker une preuve de date et du contenu dudit ensemble de données.

## Description

### DOMAINE TECHNIQUE

L'invention concerne un procédé et un système visant à transférer et à sécuriser des données issues de machines d'essais qui peuvent appartenir à des laboratoires différents. L'invention trouve notamment application dans le secteur des matériaux de l'industrie nucléaire.

### ETAT DE LA TECHNIQUE

Dans le cadre du suivi des fabrications de pièces industrielles, un fabricant ou un industriel peut faire appel à plusieurs laboratoires pour conduire des essais sur des échantillons de pièces afin de vérifier leur conformité. En général, ces laboratoires sont indépendants et disposent de leurs propres outils mais aussi de leur propre manière de compiler les résultats pour les fournir à l'industriel.

Ainsi, les données acquises dans les laboratoires par les machines d'essais sont stockées localement et archivées de manière courante dans des répertoires informatiques en réseau ou non. L'exploitation est faite localement au moyen de logiciels propriétaires, d'applications spécifiques, ou de logiciels libres. Les informations sont ensuite présentées dans des rapports d'essais.

La qualité de ces essais repose sur le savoir-faire du laboratoire et de son équipe. La traçabilité et la validation sont assurées au travers du système qualité et des accréditations adoptés.

En outre, la supervision, l'authenticité des données et la non falsification reposent sur la compétence et la droiture de l'équipe en place.

Ainsi, l'industriel récupère les rapports d'essais issus des différents laboratoires pour les analyser.

Un problème vient du fait que les données provenant de laboratoires différents peuvent être présentées de différentes manières.

Un autre problème est que les données d'essais ne sont pas toujours correctement traçables, de sorte que l'industriel peut parfois douter de leur intégrité.

Or, le suivi des données d'essais est important et nécessite un suivi de bout en bout.

### EXPOSE DE L'INVENTION

L'invention répond aux problèmes susmentionnés et propose, selon un premier aspect, un procédé de transfert sécurisé entre une machine d'essais et une base de données d'essais, ladite machine d'essais étant reliée à la base de données d'essais par un réseau au moyen d'un terminal lui-même relié à une base de données formée d'une chaine de blocs dite blockchain, ledit procédé étant mis en œuvre dans le terminal et comprend les étapes suivantes :
- obtention d'un ensemble de données d'essais issu d'une machine d'essais ;
- transmission des données d'essais à la base de données d'essais ;
- génération d'une signature numérique unique associée audit ensemble de données d'essais, ladite signature permettant d'identifier ledit ensemble de données d'essais de manière définitive ;
- écriture et horodatage dans la blockchain de ladite signature numérique unique de manière à stocker une preuve de date et du contenu dudit ensemble de données.

L'invention est avantageusement complétée par les caractéristiques suivantes, prises seules ou en une quelconque de leur combinaison techniquement possible :
- la génération de la signature des données d'essais consiste à appliquer une fonction de hachage sur lesdites données d'essais ;
- les données d'essais sont enregistrées dans un format propriétaire, le procédé comprenant une étape de traitement des données pour les rendre compatibles avec la base de données d'essais configurée pour stocker des données d'un même format ;
- il comprend une étape d'encodage des données d'essais, de préférence au moyen d'un encodage MD5, les données d'essais transmises étant alors encodées ;
- il comprend une étape de compression des données d'essai ;
- les données d'essais sont relatives à un essai de traction réalisé sur une éprouvette et comprennent au moins un parmi : des données utilisées pour l'essai, des données mesurées sur une éprouvette soumis à l'essai de traction, des données mesurées filtrées ;
- la blockchain est de type Hyperledger.

L'invention propose selon un deuxième aspect un terminal configuré pour être relié à au moins une machine d'essais, une base de données d'essais et une blockchain, ledit terminal comprenant une unité de traitement configurée pour mettre en œuvre un procédé selon le premier aspect de l'invention. L'invention propose selon un troisième aspect un réseau de machines d'essais, chaque machine d'essais étant connectée à un terminal selon la revendication précédente de manière à transférer des données d'essais à une base de données commune à toutes les machines d'essais.

Les avantages de l'invention sont multiples.

L'invention procure une disponibilité des données d'essais par leur stockage dans la base de données d'essais. Ceci est important car les données doivent pouvoir être consultées ou utilisées longtemps après que les essais n'aient été réalisés, que ce soit pour des questions de contrôle ou pour des questions de vérification. Il peut être acceptable que la consultation de ces données puisse être impossible pendant un temps court, mais la perte des données n'est pas admissible. La perte des données peut être à la fois une atteinte à la disponibilité des données ou une atteinte à l'intégrité c'est-à-dire une perte de la non-répudiation.

L'invention permet d'assurer une intégrité des données d'essais. En particulier, elle permet notamment de s'assurer que les données d'essais ne peuvent pas être modifiées a postériori. Elle permet de rendre traçable le processus d'essais. Elle permet d'identifier qui a conduit l'essai.

L'invention permet de rendre confidentielle les données en les rendant seulement accessibles à des personnes autorisées.

L'invention permet de transférer et de sécuriser des données issues de plusieurs laboratoires.

### PRESENTATION DES FIGURES

D'autres caractéristiques, buts et avantages de l'invention, ressortiront de la description qui suit, qui est purement illustrative et non limitative, et qui doit être lue en regard des dessins annexés sur lesquels :
[Fig. 1] la figure 1 illustre un exemple d'architecture générale de mise en œuvre de l'invention ;
[Fig. 2] la figure 2 illustre une machine d'essais intégrée à l'architecture de la figure 1 ;

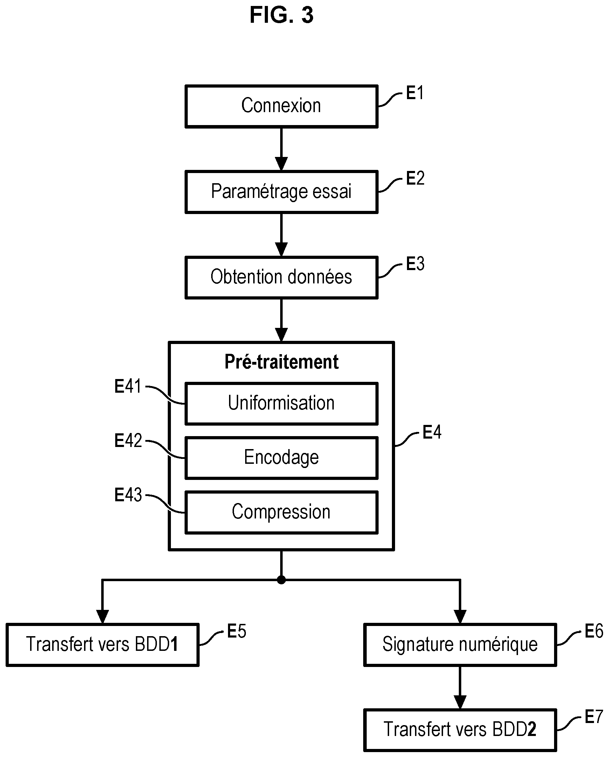

[Fig. 3] la figure 3 illustre des étapes d'un procédé conforme à un mode de réalisation de l'invention.

Sur l'ensemble des figures, les éléments similaires portent des références identiques.

### DESCRIPTION DETAILLEE

### Architecture

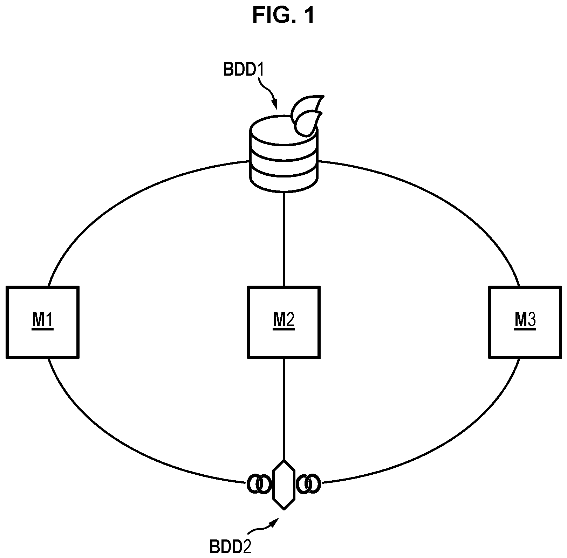

La figure 1 illustre des machines d'essais M1, M2, M3 (ici de manière non limitative trois machines d'essais) chacune respectivement connectée à une base de données d'essais BBD1 et à une base de données BDD2 formée d'une chaine de blocs, dite blockchain (en anglais).

Les machines d'essais M1, M2, M3 peuvent appartenir à des laboratoires d'essais différents ou peuvent être dans un même laboratoire.

Les machines d'essais M1, M2, M3 sont reliées aux bases de données BDD1, BDD2 via le réseau Internet, de préférence via une connexion sécurisée sur ce réseau.

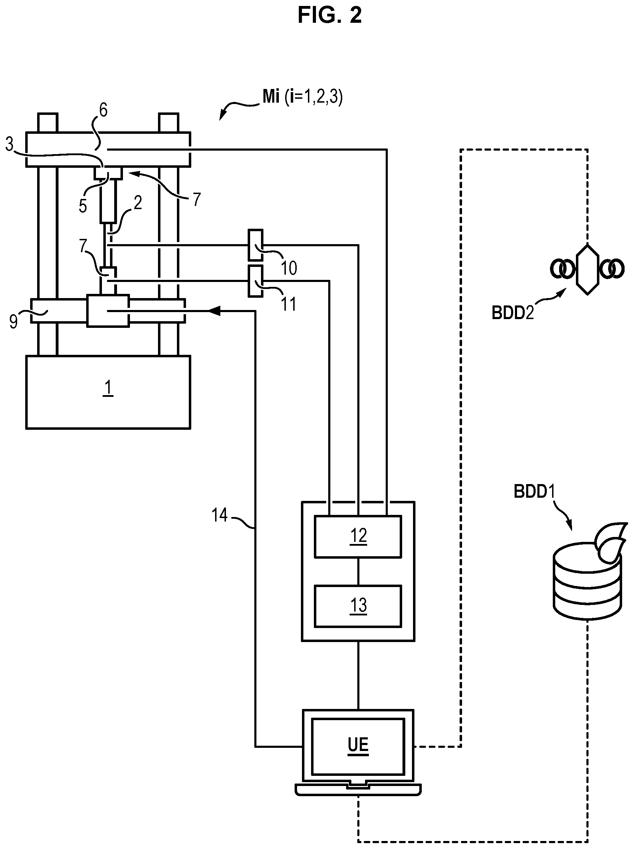

La figure 2 illustre une machine d'essais reliée aux bases de données par l'intermédiaire d'un terminal utilisateur UE qui permet de gérer le transfert vers chacune de ces bases au cours d'un procédé de transfert sécurisé entre une machine d'essais M1, M2, M3 et une base de données d'essais BBD1 comme cela sera décrit plus loin.

Un tel terminal UE comprend donc une unité de traitement telle qu'un processeur pour effectuer un certain nombre d'opérations.

Le terminal utilisateur UE est, par exemple, un ordinateur. Le terminal utilisateur UE permet de gérer l'essai sur la machine d'essais, d'assurer l'authentification d'un opérateur pour l'essai, de piloter l'essai et de transférer les données d'essais au boitier pour transfert à leur tour vers les bases données BDD1, BDD2.

Le terminal UE est connecté à la machine d'essais via un boitier 20 par l'intermédiaire d'une liaison USB ou Ethernet. Le boitier 20 permet l'acquisition des données d'essais et leur transfert au terminal UE. Le boitier 20 comprend un conditionneur 12 et des convertisseurs analogiques/numériques CANs 13. Le boitier 20 est par exemple un convertisseur CompactDAQ^{™} qui est un châssis connecté au terminal UE par USB ou Ethernet. Le châssis est rempli de plusieurs modules d'entrées/sorties conditionnés qui permettent de se connecter à différents capteurs de la machine d'essais. Le boitier 20 est du type NI cDaq 9174.

Le terminal UE comprend une application mise en œuvre par le terminal UE pour réaliser les étapes du procédé de transfert des données d'essais. Cette application comprend une interface utilisateur qui permet de dialoguer avec la machine d'essais. Cette application est, par exemple, programmée en langage G Labview 2017^{™} dans un environnement Windows 10^{™}.

La base de données d'essais BDD1 est constituée d'un serveur distant qui est maintenu par l'industriel commandant les différents essais.

La blockchain BDD2 est, de manière avantageuse, constituée d'un réseau de plusieurs serveurs (par exemple trois serveurs). Chaque serveur héberge un nœud HyperLedger constitué des éléments suivants :
- une copie locale du registre ou base de données ;
- des fonctionnalités permettant d'injecter de nouvelles données en chaîne et d'obtenir le consensus garantissant la cohérence de l'ensemble des registres sur tous les nœuds
- des fonctionnalités d'interrogation du registre ;

- une base de données locale permettant de capitaliser des données détaillées dont la signature sera ancrée en chaîne.
- des algorithmes (en anglais, « smart contracts ») permettant de traiter des données en chaîne.

### Machine d'essais

Les machines d'essais sont, par exemple, des machines de traction. Toutefois, l'invention s'applique à tous types d'essais et donc de machine d'essais.

De telles machines utilisées pour les essais de traction peuvent être de marques et de technologies diverses mais elles respectent généralement le principe de fonctionnement suivant : la machine est constituée d'un bâti 1 très rigide (comparé à la rigidité de l'éprouvette), une éprouvette 2 est fixée entre deux lignes d'amarrage 3, 4. L'une des lignes est fixée à une cellule de charge fixée 5 sur une traverse 6 dont le rôle est de mesurer l'effort appliqué sur l'éprouvette 2. La seconde ligne 7 est fixée sur une traverse mobile 9 (machine électromécanique) ou un vérin hydraulique (machine servo-hydraulique) permettant de tirer sur l'éprouvette 2.

La force appliquée et le déplacement du vérin ou de la traverse 9 sont mesurés tout au long de l'essai. Le dispositif est généralement complété par un extensomètre 10 dont le rôle est de mesurer directement l'allongement de la partie utile de l'éprouvette 2 en s'affranchissant de tout effet parasite engendré par les lignes d'amarrage ou par le bâti de la machine. Finalement, un four ou une enceinte réfrigérée (non représentés) sont utilisés pour les essais à haute ou à basse température. Ces dispositifs sont généralement centrés uniquement sur l'éprouvette 2 et pourvus dbrifices permettant le passage des lignes damarrage. Ces dernières pourront être équipées de barrières thermiques protégeant la cellule de force et le vérin et évitant toute dérive thermique des mesures associées.

Plusieurs mesures de température, réparties sur toute la zone utile de l'éprouvette 2 permettent de s'assurer que la température est homogène. Le choix de la technique de mesure devra garantir que les températures mesurées sont représentatives de la température de l'éprouvette.

Les mesures de température sont réalisées à l'aide de thermocouples. La jonction entre deux métaux de nature différente génère une différence de potentiel qui varie en fonction de la température de la jonction. Les variations sont de quelques µV par °C. Les autres capteurs sont généralement basés sur la mesure d'une variation de résistance (cellule de charge 5, extensomètre 10) ou d'inductance 11 (capteur de déplacement LVDT). Chaque capteur doit donc être associé à un conditionneur 12 permettant d'amplifier le signal (on se ramène généralement à une plage de tension de 0 à 10 V).

Pour chaque capteur, on construit une loi d'étalonnage qui décrit la relation entre la grandeur physique vue par le capteur et la tension en sortie de conditionneur. La loi d'étalonnage est généralement exprimée sous la forme d'un polynôme dont le degré sera adapté à la réponse du capteur.

Notons que d'autres techniques de mesures peuvent être mises en œuvre dans certaines situations (mesure de température par capteur infrarouge, extensomètre optique, etc.). Les spécificités de ces technologies alternatives ne seront pas détaillées ici.

Le pilotage de la machine d'essais consiste à contrôler l'évolution temporelle d'un ou de plusieurs paramètres de chargement afin de respecter une séquence prédéfinie. Un tel pilotage est mis en œuvre au moyen du terminal utilisateur UE via l'interface utilisateur et une ligne d'asservissement (schématisée par la ligne 14 sur la figure 2).

A chaque instant, la séquence de chargement définit la consigne attendue. Le système de pilotage compare la mesure donnée par le capteur à la consigne puis ajuste le signal de commande du vérin ou de la traverse en fonction de l'écart observé entre mesure et consigne.

Pour un essai de traction, il est possible de contrôler l'évolution de la force (pilotage en force), du déplacement de la traverse (pilotage en déplacement), ou de l'allongement de l'éprouvette (pilotage en déformation) :
- le pilotage en force est envisageable pour les faibles niveaux de chargement (dans la plage de comportement élastique) mais peut engendrer des problèmes de stabilité de pilotage dès l'apparition de la plasticité.
- le pilotage en déformation permet de réaliser des essais à vitesse de déformation constante, ce qui présente de nombreux avantages dans le cas de matériaux présentant une forte sensibilité à la viscosité. Ce type de pilotage peut cependant s'avérer délicat car il repose sur un capteur monté directement sur l'éprouvette.
- le pilotage en déplacement est potentiellement un peu moins précis que le pilotage en déformation car la mesure de déplacement inclut les réactions des lignes d'amarrage et de la traverse ou de la tête du vérin. Elle s'avère plus robuste car elle utilise un capteur fixé à demeure sur la machine L'acquisition des données d'essais consiste en l'enregistrement des mesures de chaque capteur tout au long de l'essai. C'est le terminal UE et le boitier 20 qui permettent l'enregistrement des mesures directement dans un fichier. Les signaux issus de la machine de traction sont des signaux analogiques qui varient entre ±10 volts et correspondent à une force exprimée en kN, un déplacement du vérin exprimé en mm et des valeurs d'extensométries exprimées en *µm*.

Les signaux issus du four proviennent des thermocouples de type K et correspondent aux températures en bas, au milieu et en haut de l'éprouvette testée et sont exprimées en °C.

A l'issu d'un essai, au niveau du terminal utilisateur UE, on dispose d'un enregistrement temporel des mesures de chacun des capteurs.

Ces enregistrements font partie d'un ensemble qu'on nomme « données d'essais » lorsqu'on se réfère à un essai.

Dans ce qui suit, on entend par données d'essais, toutes données relatives à l'essai : des données utilisées pour l'essai, des données mesurées sur une éprouvette soumis à l'essai de traction, des données mesurées filtrées, des références de l'éprouvette, sur la machine d'essais.

De telles données d'essai sont, par exemple, détaillées dans la norme NF EN ISO 6892 « Matériaux métalliques - Essai de traction ».

### Procédé

On décrit maintenant un procédé de transfert des données conforme à l'invention.

Un utilisateur se connecte à la machine d'essais et au boitier 10 via le terminal UE (étape E1) et en particulier via l'application. Cette connexion nécessite l'entrée d'un identifiant et d'un mot de passe.

L'utilisateur paramètre l'essai, par exemple un essai de traction et donne instruction via le terminal UE de démarrer l'essai (étape E2).

Ensuite, l'essai est réalisé et permet d'obtenir à plusieurs moments de l'essai un ensemble de données d'essais (étape E3). L'essai, en tant que tel, est réalisé selon la procédure précédemment décrite. Ainsi, au cours de l'essai ainsi qu'à l'issue de cet essai, le terminal UE dispose d'ensembles de données d'essais qui correspondent à cet essai.

Au cours de l'essai, les divers ensembles de données d'essais sont transférés à la base de données d'essais BDD1.

Le choix du type de données à transférer fait partie de choix de l'industriel quant aux données à stocker.

Ce transfert va lui-même engendrer un certain nombre d'opérations exécutées par l'application chargée dans le terminal UE qui, comme déjà indiqué, gère le transfert des données vers les différentes bases de données BDD1, BDD2.

Avant le transfert en tant que tel, l'ensemble des données considéré subit un pré-traitement (étape E4).

Un tel pré-traitement comprend l'un ou l'autre des traitements suivants, seul ou en combinaison : uniformisation des données de l'ensemble (étape E41), encodage de l'ensemble des données (étape E42), compression de l'ensemble des données (étape E43).

L'uniformisation (étape E41) consiste à rendre compatible l'ensemble des données d'essais de la base de données d'essais BDD1. En effet, les données d'essais sont dans un format propriétaire propre à la machine d'essais et au laboratoire d'essais. De cette façon, les données stockées sur la base de données d'essais BDD1 sont dans un format uniforme. L'encodage (étape E42) consiste à encoder l'ensemble des données d'essais au moyen par exemple d'un encodage MD5 afin de pouvoir sécuriser l'ensemble des données d'essais. Bien sûr, d'autres types d'encodage peuvent être utilisés.

Le choix d'encoder ou non l'ensemble des données d'essais dépend du type de données d'essais et est un choix de l'industriel quant aux données qui doivent être considérées comme sensibles ou non.

La compression (étape E43) de l'ensemble des données d'essais permet de limiter la place occupée par le stockage dans la base de données BDD1.

Le transfert de l'ensemble ainsi prétraité par l'un ou l'autre des traitements présentés ci-avant est donc effectué vers la base de données BDD1 (étape E5).

En parallèle, l'ensemble des données d'essais peut être transféré vers la blockchain. Là encore, c'est un choix de l'industriel que de choisir ou non de stocker une preuve d'obtention de cet ensemble de données d'essais vers la blockchain BDD2.

Pour ce faire, une signature numérique unique associée est obtenue à partir de l'ensemble des données d'essais à transmettre à la base de données BDD1 (étape E6). L'idée ici est de pouvoir disposer d'une preuve des dates d'obtention de cet ensemble de données d'essais ainsi que du contenu de l'ensemble de données d'essais.

Cette signature numérique unique est ensuite transférée vers la blockchain BDD2 (étape E7). On parle aussi d'ancrage dans la blockchain BDD2.

La signature numérique est en particulier obtenue au moyen d'une fonction de hachage appliquée sur l'ensemble de données à transférer et caractérise l'ensemble de données. Cette signature permet d'identifier de manière sure l'ensemble de données transférées. En effet, dès lors que les données de l'ensemble sont modifiées, la fonction de hachage appliquée sur l'ensemble modifié ne donnera pas la même signature numérique. Ainsi, on peut déterminer que l'ensemble de données a été modifié. La signature numérique comprend par construction sa date de création ce qui permet de la tracer dans le temps.

On rappelle ainsi qu'une fonction de hachage (en anglais, « hash ») une fonction particulière qui, à partir de l'ensemble des données d'essais, calcule la signature numérique qui permet d'identifier rapidement l'ensemble des données d'essais initiales.

Le stockage dans la blockchain permet donc d'horodater de manière sure et infalsifiable l'ensemble des données d'essais.

## Revendications

1. Procédé de transfert sécurisé entre une machine d'essais et une base de données d'essais (BDD1), ladite machine d'essais étant reliée à la base de données d'essais (BDD1) par un réseau au moyen d'un terminal (UE) lui-même relié à une base de données (BDD2) formée d'une chaine de blocs dite blockchain, ledit procédé étant mis en œuvre dans le terminal (UE) et comprend les étapes suivantes :
- obtention (E3) d'un ensemble de données d'essais issu d'une machine d'essais, les données étant dans un format propriétaire propre à la machine d'essais ;
- pré-traitement des donnes (E4) comprenant : une uniformisation des données de l'ensemble (E41) pour les rendre compatibles avec la base de données d'essais configurée pour stocker des données d'un même format ;
- transmission (E5) des données d'essais à la base de données d'essais (BDD1) ;
- génération (E6) d'une signature numérique unique associée audit ensemble de données d'essais, ladite signature permettant d'identifier ledit ensemble de données d'essais de manière définitive ;
- écriture (E7) et horodatage dans la blockchain de ladite signature numérique unique de manière à stocker une preuve de date et du contenu dudit ensemble de données.

2. Procédé selon la revendication 1, dans lequel la génération (E6) de la signature des données d'essais consiste à appliquer une fonction de hachage sur lesdites données d'essais.

3. Procédé selon l'une des revendications précédentes, comprenant une étape (E42) d'encodage des données d'essais, de préférence au moyen d'un encodage MD5, les données d'essais transmises étant alors encodées.

4. Procédé selon l'une des revendications précédentes, comprenant une étape (E43) de compression des données d'essai.

5. Procédé selon l'une des revendications précédentes, dans lequel les données d'essais sont relatives à un essai de traction réalisé sur une éprouvette et comprennent au moins un parmi : des données utilisées pour l'essai, des données mesurées sur une éprouvette soumis à l'essai de traction, des données mesurées filtrées.

6. Procédé selon l'une des revendications précédentes, dans lequel la blockchain (BDD2) est de type Hyperledger.

7. Terminal configuré pour être relié à au moins une machine d'essais, une base de données d'essais (BDD1) et une blockchain (BDD2), ledit terminal (UE) comprenant une unité de traitement configurée pour mettre en œuvre un procédé selon l'une des revendications précédentes.

8. Réseau de machines d'essais, chaque machine d'essais (M1, M2, M3) étant connectée à un terminal (UE) selon la revendication précédente de manière à transférer des données d'essais à une base de données commune à toutes les machines d'essais.
